# EUROPEAN PATENT APPLICATION

(11) **EP 4 567 694 A1**
(43) Date of publication of application: **11.06.2025**
(21) Application number: 23215237.1
(22) Date of filing: 08.12.2023
(51) Int. Cl.: G06Q 10/08, G06Q 10/0832, G06Q 10/30, B29B 17/02, G06F 16/23, G06F 16/24, H04L 67/12

(54) **MATERIAL TRACING AND LOT TRACKING**

(71) Applicant: Borealis AG, 1020 Vienna (AT)
(72) Inventor: SCHNEIDER, Horst, Schwechat (AT); WYKOPAL, Petra, Schwechat (AT); VOIGT, Björn, Stenungsund (SE); KUFNER, Andreas, Vienna (AT); EK, Anders, Stenungsund (SE); SPUDIL, Peter, Schwechat (AT); STROSS, Arno, Burghausen (DE); STUCHLY, Bianca, Schwechat (AT); PREYER, Josef, Schwechat (AT); SCHAFFELD, Julia, Burghausen (DE); EDEN, Mikael, Stenungsund (SE); KLENPER, Gyoergy, Schwechat (AT); GSELLMANN, Günter, Linz (AT); UNGER, Christian, Vienna (AT)
(74) Representative: Laine IP Oy

(57) **Abstract**

According to an example aspect of the present invention, there is provided an apparatus configured to: check a database for delivery data relating to an incoming shipment comprising recyclable plastic material, generate, a data structure associated with a recycling process which transforms the recyclable plastic material into recycled plastic material, the recycling process comprising unloading, dry sorting, and pelletization or compounding of the recyclable plastic material, wherein the recycled plastic material is packaged into at least one shipment lot after the recycling process, and check, at predefined intervals, the database for data associated with the recycling process and add the data to the data structure, and provide the data structure via a cloud service.

## Description

### FIELD

This disclosure provides improved material tracing, in particular in the field of plastic recycling applications.

### BACKGROUND

Plastic recycling is an important field for ecological as well as economical reasons. However, the feedstock to be reused may contain impurities and/or different types of plastic. Care must be taken to ensure that the recycled product has quality in the recycled material in. Thus, material tracing down to the delivery lot level is an important and growing customer demand.

### SUMMARY OF THE INVENTION

The invention is defined by the features of the independent claims. Some specific embodiments are defined in the dependent claims.

According to a first aspect of the present invention, there is provided an apparatus comprising a processing core, at least one memory including computer program code, the at least one memory and the computer program code being configured to, with the at least one processing core, cause the apparatus at least to: check a database for delivery data relating to an incoming shipment, the incoming shipment comprising recyclable plastic material, and generate, responsive to the delivery data being found within the database, a data structure associated with a recycling process, wherein the recycling process transforms the recyclable plastic material into recycled plastic material, said recycling process comprising unloading, dry sorting, and pelletization or compounding of the recyclable plastic material, and wherein the recycled plastic material is packaged into at least one shipment lot after the recycling process, and check, at predefined intervals, the database for data associated with the recycling process, and add said data to the data structure, and check, at predefined intervals, the database for an indication that the recycling process is complete, said indication preferably comprising shipment lot data related to the at least one shipment lot, and responsive to the indication being found, provide the data structure via cloud service, wherein a mass balance of the recyclable plastic material is calculated before and after each process phase, wherein the calculated mass balances are stored in the database and in the data structure, and wherein the data structure comprises the shipment lot data.

According to a second aspect of the present invention, there is provided a method for producing information related to a plastic recycling process, the method comprising: checking, by an apparatus, a database for delivery data relating to an incoming shipment comprising recyclable plastic material, generating, by the apparatus , responsive to the delivery data being found within the database , a data structure associated with a recycling process, wherein the recycling process transforms the recyclable plastic material into recycled plastic material, said recycling process comprising unloading, dry sorting, and pelletization or compounding of the recyclable plastic material, and wherein the recycled plastic material is packaged into at least one shipment lot after the recycling process, checking, by the apparatus, at predefined intervals, the database for data associated with the recycling process, and adding said data to the data structure , and checking, by the apparatus, at predefined intervals, the database for an indication that the recycling process is complete, said indication preferably comprising shipment lot data related to the at least one shipment lot, responsive to the indication being found, providing, by the apparatus, the data structure via cloud service, wherein a mass balance of the recyclable plastic material is calculated before and after each process phase, the calculated mass balances are stored in the database and in the data structure, and wherein the data structure comprises the shipment lot data.

In particular, the recycling process of the first aspect or of the second aspect may comprise extrusion, pelletization and then optionally compounding.

According to a third aspect of the present invention, there is provided a computer program, storable on non-transitory medium, configured to cause a method in accordance with the second aspect to be performed.

### BRIEF DESCRIPTION OF THE DRAWINGS

FIGURES 1A and 1B illustrate a schematic view of example recycling processes in accordance with at least some embodiments of the present invention;
FIGURE 2 illustrates a schematic view of an example recycling process in accordance with at least some embodiments of the present invention;
FIGURES 3A and 3B illustrate exemplary sequence diagrams of example communication in accordance with at least some embodiments of the present invention;
FIGURE 4 illustrates an exemplary data structure in accordance with at least some embodiments of the present invention;
FIGURE 5 illustrates an exemplary apparatus in accordance with at least some embodiments of the present invention; and
FIGURE 6 illustrates an exemplary method capable of supporting at least some embodiments of the present invention.

### EMBODIMENTS

In the present disclosure, a method and system are provided for the purpose of improving efficiency as well as traceability in recycling, preferably in plastic recycling processes. In this disclosure, plastic is typically recycled in a production process by dry sorting incoming feedstock by material and/or colour into somewhat homogenous material lots. Said lots are then processed batch by batch. Packages are formed of the batch and shipped for eventual reuse.

Material tracing is an important part of modem recycling. From a production point of view, mass balance may be used to track the efficiency of the process (how much waste is generated) and the quality of the material (if a material performs worse than another material, poor shipment). From a customer perspective, the traceability on this level allows a targeted trouble shooting in case the final recycled product does not match with the targeted quality or specification. Retaining details such as feedstock provenance and process parameters is useful and supports recycling of high end plastic recyclates. Further, from the customer's point of view, accurate estimates regarding the production timetable are useful, for example in just-in-time manufacturing. Therefore, the present system synergistically solves these issues by integrating mass balance and traceability details (along with other data) and makes this data available in real-time to stakeholders, such as the supplier and the consumer (manufacturer of recycled goods).

These embodiments provide a technical solution to a technical problem. One technical problem being solved is managing the information involved in the recycling process in order to satisfy all stakeholders. In practice, this is problematic because the incoming recyclable material is heterogeneous, whereby each incoming material shipment may have different qualities and history which need to be recorded and which affect the manufacturing parameters as well. Further, there is a need to provide the data in a convenient manner to the stakeholders, while taking into account that not all data should be shared with everyone. Even further, there is a need to control the recycling process and provide up-to-date manufacturing information and estimates, while sharing only the desired data with stakeholders.

The embodiments herein overcome these limitations by providing an apparatus configured to access and modify a database connected to the production process. In this manner, plastic recycling control can be accomplished in a more accurate and robust fashion. This results in several advantages. First, the production database is not accessed by stakeholders and predictive data is not added to it unnecessarily. Second, the manufacturing process may be managed in an improved manner due to the generation of the data structure based on the received delivery details. This allows estimating the entire process and allocating resources effectively. Third, data may be taken out of the system in a secure manner and signed to ensure data integrity. In some embodiments, stakeholders can authorize changes to the production plan in a verified manner, where it can later be proved who has authorized what. Feedstock deviations, e.g. in the provided composition or quality, down to the supplier and specific deliveries can be identified. Further, the structure disclosed herein provides improved troubleshooting, because issue tracking may be started from any point of the process, not only the end product. For example, tracking may be started from an intermediate process and the entire process analysed from that starting point forwards and/or backwards. Other technical improvements may also flow from these embodiments, and other technical problems may be solved.

In the present disclosure, weight is generally used to refer to the mass of a physical entity or a collection of such entities in kilograms. Net weight is used to refer to weight where the weight of the packaging is not included.

In the present disclosure, the term stakeholder is used herein to refer to parties associated with, impacted by, or interested in the recycling process. A stakeholder may be a person, an apparatus (for example a server), a production resource (for example a storage location) or an organization. Stakeholders may be configured to communicate with an apparatus, for example apparatus 300, in order to transmit and receive information. In embodiments, feedstock is received, for example for production purposes.

The term "feedstock" as used herein refers to a recyclable material mixture, that has already completed its first use cycle, and is not to be confused with "virgin" feedstock which has not completed its first use cycle. The feedstock may comprise recyclable plastic objects. For example, the plastic objects may comprise plastic material, for example one or more of the following materials: polyolefins such as polyethylene and polypropylene, polyacetal, polystyrene, polyvinyl chloride, acrylic, polycarbonate, synthetic rubber, phenol formaldehyde resin, neoprene, nylon, polyacrylonitrile, polylactic acid, polyvinyl butyral, silicone, acrylonitrile butadiene styrene, polyaryletherketone. Such recyclable plastic objects may be originating from post-industrial and/or post-consumer waste, latter being preferred. Post-industrial waste objects may be coming from manufacturing scrap, and post-consumer waste objects may be coming from usage of consumers, after being used at least once. It is particularly preferred when majority of the feedstock comprising the recyclable plastic objects is polyolefins, in particular polyethylene and polypropylene. That is, it is particularly preferred when the feedstock comprises from 50 to 100 wt.-%, more preferably from 70 to 100 wt.-%, and most preferably from 80 to 100 wt.-% polyethylene and/or polypropylene.

Form of feedstock. The feedstock may be received in any suitable format. Typically, it is received via a transport, in particular via truck or train. The feedstock may be in the form of plastic objects, for example. In particular, it may be in the form of plastic containers such as flexible packaging, bottles, or in the form of granules. The feedstock may be heterogeneous with respect to at least the following: colour, material, object type, object size. A collection of plastic objects may be termed a bale.

A recycling process, such as process 100 or 101, may comprise at least some of the following phases: receiving 110, unloading 120, dry sorting 140, processing 160 (which comprises at least extrusion/pelletization or compounding), packaging 170 and shipping 180.

At least one process order may be used in association with a recycling process such as process 100 or 101. A process order may be used to allocate resources and/or schedule production. A process order may be stored within a database, such as database 200. Data, in particular any one of data 111, 121, 131, 132, 141, 151, 152, 153, 161, 162, 163, 176, 177, 186 may comprise or be associated with a process order. A process order may be said to correspond with a phase when the process order comprises data regarding said phase and/or instructions to perform said phase, for example at a specified time.

The feedstock is received from a vendor, for example responsive to a purchase order being sent to said vendor. The purchase order may comprise at least one of: a purchase order number, a material specification, an order date.

When the feedstock is received, for example in receiving phase 110, the transport ID (for example the truck ID) is checked and the transport is weighed. The shipment comprises feedstock which is recyclable plastic material. In connection with the receiving, following delivery data 111 is registered into the manufacturing information system, for example into a database such as database 200. The data may be registered or received in electronic form from another system, for example from the vendor's system. Registering may be done at least in part in an automatic manner, whereby a request for at least part of the delivery data 111 is triggered by the creation, processing, finalization or acceptance of the purchase order. At least part of the delivery data 111 may be received from a smart scale or as a result of a visual inspection, for example conducted by a machine vision apparatus.

**Table 1. Exemplary delivery data 111**

| ***Data structure 111*** |
|---|
| *Raw material specification* |
| *Feedstock material number* |
| *Ship from party* |
| *Purchase order number* |
| *Purchase order information* |
| *Inbound delivery number* |
| *Item number (from purchase order)* |
| *Vendor data* |
| *Order volume* |
| *Delivery date* |
| *Gross weight* |
| *Time stamp* |

Unloading. After receiving, the received feedstock must be unloaded from the transport. When unloading, for example as part of unloading phase 120, the incoming shipment is stored in at least one storage location, such as storage bin 135. The storage location the received feedstock is unloaded into may be termed the first storage location. A storage location may comprise any containment, for example at least one of the following: bale, truck, container, bin, truck, rail car. Rejected feedstock, for example rejected bales, may be stored in different storage locations than the accepted feedstock. In connection with the unloading, unloading data 121 is registered into the manufacturing information system, for example into a database such as database 200. The data may be registered or received in electronic form from another system, for example from an automatic weighing apparatus. Registering may be done at least in part in an automatic manner, whereby a request for at least part of the data 121 is triggered by the creation, finalization or acceptance of an unloading process order 127 within database 200. Storage locations typically only comprise material from a single feedstock lot.

**Table 2. Exemplary unloading data**

| ***Data structure 121*** |
|---|
| *Net weight of accepted lot (after truck weight is taken at dispatch)* |
| *Net weight of rejected bales* |
| *Type of feedstock specification* |
| *Batch and*/*or Lot number of supplier* |
| *Storage Location ID for the accepted lot* |
| *Storage Location ID for the rejected bales* |
| *Reason for rejection of rejected bales* |
| *Goods receipt* |
| *Time stamp* |
| *Receiving batch number generated* |
| *Unloading process order 127* |

After unloading, the unloaded material is stored in a first storage location in first storage phase 130. Storage locations, such as bins 135, may be "smart", whereby the location is associated with or comprises a scale for weighing the contents of the location. A data structure, such as first storage location data 131, may be associated with each location within database 200. Said data structure may be updated each time an operation is conducted with respect to the first location. The data may be registered or received in electronic form from another system, for example from an automatic weighing apparatus such as a scale. Registering may be done at least in part in an automatic manner, whereby a request for at least part of the data 131 is triggered by the creation, finalization or acceptance of a process order related to the location, for example a filling process order, within database 200.

**Table 3. Exemplary first storage location data**

| ***Data structure 131*** |
|---|
| *Storage Location ID* |
| *Location contents weight* |
| *Type of feedstock specification* |
| *Batch and*/*or Lot number of supplier* |
| *Location filled* / *emptied* |
| *Total delivery lot weight* |
| *Filling* / *emptying process order 137* |
| *Recipe* |
| *Time stamp* |

Dry sorting. The material within the first storage locations is dry sorted, for example as part of dry sorting phase 140. As a result of the dry sorting, the dry sorted material 144 is placed within at least one second storage location 155, such as a storage container. Each quantity of dry sorted material 144 from a distinct dry sorting 140 forms a quantity of dry sorted material 145 within the second storage location 155. In other words, material 144 from a dry sorting 140 may be placed into multiple second storage locations 155, and the material within a second storage location 155 may comprise materials 145 from several distinct dry sortings 140.

A second storage location may comprise any containment, for example at least one of the following: bale, truck, container, bin, truck, rail car. Part of the material may be rejected and placed in a different storage location from the other material. The material may be dry sorted based on material and/or colour, for example mixed colour polyethylene may be sorted into separate storage locations of black polyethylene and coloured polyethylene. In another example, mixed polypropylene may be sorted into separate storage locations of transparent polypropylene and coloured polypropylene.

In connection with the dry sorting, dry sorting data 141 is registered into the manufacturing information system, for example into a database such as database 200. Dry sorting data 141 may be registered or received in electronic form from another system, for example from an automatic weighing apparatus. Registering may be done at least in part in an automatic manner, whereby a request for at least part of the data 141 is triggered by the creation, finalization or acceptance of a dry sorting process order 147 within database 200. As can be seen in the below table, weight may be stored for 1 to *n* sorted materials, where each sorted material may be part of 1 to *n* material streams. Said material streams may comprise different materials from each other as a result of sorting.

**Table 4. Exemplary dry sorting data**

| ***Data structure 141*** |
|---|
| *Weight of pre-sorted material (1 to n)* |
| *Weight of rejected material (1 to n)* |
| *Weight of material (for each storage location) for each material stream (1 to n)* |
| *Type of material (for each storage location) for each material stream (1 to n)* |
| *Time stamp* |
| *Dry sorting process order 147* |

Storage locations, such as locations 155, may be "smart", whereby they may be associated with or comprise a scale for weighing the contents of the storage location. Additionally or alternatively, a data structure, such as second storage location data 151, may be associated with each storage location within database 200. Said data structure may be updated each time an operation is conducted with respect to the storage location. The second storage location data may be registered or received in electronic form from another system, for example from an automatic weighing apparatus. Registering may be done at least in part in an automatic manner, whereby a request for at least part of the data 151 is triggered by the creation, finalization or acceptance of a process order 157 related to the second storage location, for example a emptying process order, within database 200.

**Table 5. Exemplary second storage location data**

| ***Data structure 151*** |
|---|
| *Storage location ID 152 (for each storage location)* |
| *Data 153 (for each quantity of sorted material 145 within the storage storage location)* |
| *Weight of material (for each storage location)* |
| *Type of material (for each storage location)* |
| *Location of storage location* |
| *Time stamp* |
| *Process order 157* |

Storage locations may receive dry sorted feedstock from several different incoming feedstock lots. In other words, storage locations may be filled over time and as the precise mix of material within incoming lots varies, it may be that the material within the storage location is a mixture of different feedstock lots. For example, a storage location may comprise black polyethylene (PE) from a first feedstock lot received in January, black PE from a second feedstock lot received in February, and black PE from a third feedstock lot received in March. Each feedstock lot may have been received from a different vendor, may have been stored in different locations, and may have undergone a different dry sorting process, for example. Therefore, in order to retain the information related to the feedstock lots, the storage location data structure 151 may comprise data 153 associated with each quantity of material within the storage location. This is useful to track the feedstock in case of any adverse process reactions or quality issues later on.

The net weight of each quantity of feedstock within a first or second storage location may be obtained for example by weighing the storage location before and after each operation, such as sorting. For example, if the weight of the storage location was 300 kilograms before the dry sorting of a feedstock lot, and it was 500 kilograms after the sorting, the storage location now contains 200 kilograms of the sorted feedstock lot and 300 kilograms of a previous feedstock lot. Accordingly, the data structure 151 associated with said storage location would then comprise sorted feedstock lot data 153 associated with the sorted feedstock lot as well as data 153 associated with the previous feedstock lot. In another example, the weight may be calculated based on differential tracking of weight added to and/or removed from the storage location.

**Table 6. Exemplary sorted feedstock lot data registered with respect to each quantity of feedstock within the second storage location**

| ***Data 153*** |
|---|
| *Measured net weight of the (specific) quantity of sorted feedstock within the storage location* |
| *Batch and*/*or Lot number* |
| *Data 111 associated with the received feedstock which the specific sorted feedstock belongs to* |
| *Data 121 associated with the unloading of the received feedstock* |
| *Data 131 associated with the storage location the which the specific sorted feedstock was in* |
| *Data 141 associated with the dry sorting process of the specific sorted feedstock* |
| *Time stamp* |

Regarding the processing 160, the processing may comprise any of the following processing phases, for example: Washing, extrusion, compounding, deodorization, cooling, chopping, etc. After every processing phase, rejected material is collected and set aside. This rejected material may be later reused. Further, before and after every processing phase, the weight of the material to be processed and the processed material is measured. Thus, a mass balance may be calculated for each processing phase. The mass balance may be calculated, for example, by a SCADA system or by the apparatus 300. In the process 160, the recyclable plastic material 114 is processed so that it becomes recycled plastic material 166. In other words, the recyclable material is transformed into recycled material.

The material to be processed is formed into a batch campaign. Batch campaign means the production of a certain type and amount of material, for example a campaign could be a black PE campaign for example for 75 thousand kilos. A batch can be between 25 kilograms and 500 tons, preferably between 20 tons and 160 tons, in particular 75 or 150 tons. Multiples of 20 tons may be preferred.

A batch campaign may further comprise a processing plan. A processing plan may comprise selected processing phases and, optionally, processing parameters associated with the selected phases. A processing plan may be formulated by a user. An apparatus, such as apparatus 300, may also formulate the processing plan, for example based on an request (an order for material) from a stakeholder. An apparatus, such as apparatus 300, may formulate the processing plan based on a previous batch campaign, for example using the same material, wherein the previous batch campaign data may be located within a database such as database 200. The apparatus may be configured to search the database for a previous batch campaign corresponding to a stakeholder order, and in the event that a corresponding campaign is found, to use the processing phases and optionally the processing parameters as a basis for the batch campaign.

Typically, at least one storage location is selected to be included into the batch campaign. A data structure, such as batch campaign data 161, may be associated with each batch campaign within database 200. Said data structure may be updated each time an operation is conducted with respect to the campaign. The batch campaign data may be registered or received in electronic form from another system, for example from an automatic weighing apparatus. Registering may be done at least in part in an automatic manner, whereby a request for at least part of the data 161 is triggered by the creation, finalization or acceptance of a process order 167 related to the batch campaign, for example a extrusion process order, within database 200.

**Table 7. Exemplary batch campaign data**

| ***Data structure 161*** |
|---|
| *Storage location data 151 (for each storage location)* |
| *Process parameters 162 for each processing phase* |
| *Batch and*/*or Lot number* |
| *Weight 163 of material before and after each processing phase* |
| *Process plan comprising an indication of the planned processing phases* |
| *Time stamp* |
| *Process order 167 (several process orders may be in 161)* |

Process parameters 162 are stored within database 200 for each processing phase of the batch campaign. The parameters are therefore available, for example to the recipient of the recycled material 166. The parameters may be communicated later, in real time or in any other time frame.

**Table 8. Exemplary parameters registered with respect to a processing phase**

| ***Data structure 162*** |
|---|
| *Process order 168* |
| *Batch ID* |
| *Laboratory information management system (LIMS) data including sampling points* |
| *Weight of material before and after the processing phase* |
| *Yield (estimate of produced material per material used)* |
| *Machine parameters (for example temperature values)* |
| *Machine process history (for example electrical current values during process)* |
| *Mass balance (e.g. from extruder)* |
| *Time stamp* |

The dry sorted feedstock may be washed as part of processing 160. Suitable equipment such as friction washers or rotary washers may be used as part of the process. Suitable washing compounds include water, caustic soda, detergent, organic solvent, or any combination thereof. Washing may be repeated as required.

After washing, the material may be extruded using a plastics extruder. After the extrusion phase, the recycled material 166 may be immediately ready for packaging. The recycled material 166 is typically be formed into pellets (pelletization). The extruded and/or pelletized material may be compounded after extrusion. Deodorization may be optionally performed after the extrusion process.

The washed and/or extruded feedstock may undergo a compounding process, where additives and/or other materials, i.e. the components are mixed with the material. The mixing is performed when at least some of the components are in a molten state. In other words, the material may be first be extruded and pelletized and then optionally compounded, or alternatively compounded directly after washing. After compounding, the material may be pelletized.

Recycled plastic material 166 is produced from processing 160. Recycled plastic material 166 comprises at least in part recyclable plastic material 114. After processing 160, at least some of the recycled material 166 may be packaged, for example as part of packaging phase 170. Some of the material 166, however, may be returned to a prior part of the method discussed herein. For example, some of the material 166 may contain impurities and thus will need to undergo dry sorting again.

In connection with the packaging, packaging data 171 is registered into the manufacturing information system, for example into a database such as database 200. The packaging data may be registered or received in electronic form from another system, for example from an automatic weighing apparatus. Registering may be done at least in part in an automatic manner, whereby a request for at least part of the data 171 is triggered by the creation, finalization or acceptance of a packaging process order within database 200.

As a consequence of the packaging, at least one package is formed. Said package may comprise at least some of the recycled material 166. A package may comprise material from more than one batch, whereby the data structure 176 then comprises batch campaign data 161 for each batch within the package. For each package, package data 176 is registered into the manufacturing information system, for example into a database such as database 200. The package data may be registered or received in electronic form from another system, for example from an automatic weighing apparatus. Registering may be done at least in part in an automatic manner, whereby a request for at least part of the data 176 is triggered by the creation, finalization or acceptance of a packaging process order within database 200.

A package may be any of the following: a bag (for example 5, 10, 25 or 50 kilograms), a big bag (for example 100, 500, 1000, 1500 kilograms), an octabin, a container. A type of feedstock specification may be determined, for example when shipping and/or receiving material, said type comprising the detailed material composition of the package, for example XXX-X Polypropylene or XXX Polyethylene.

**Table 9. Exemplary package data**

| ***Data structure 176*** |
|---|
| *Batch campaign data 161 (for each batch in package)* |
| *Type of feedstock specification* |
| *Batch and*/*or Lot number* |
| *Package identifier* |
| *Product name* |
| *Additive 1..additive n* |
| *Package measurement result* |
| *QA(quality assurance) data 177 (for each batch in package)* |
| *Time stamp* |

Independently of the packaging, a quality assurance process is conducted on the recycled material 166. Such a process may incorporate data from any stage of the production. In connection with the quality assurance process, the data 177 is registered into the manufacturing information system, for example into a database such as database 200. The data may be registered or received in electronic form from another system, for example from a SCADA or Laboratory information management system, LIMS. Registering may be done at least in part in an automatic manner, whereby a request for at least part of the data 171 is triggered by the creation, finalization or acceptance of a quality assurance process order within database 200. The data structure 176 for each package comprises quality assurance data 177. The certificate of analysis, COA, may comprise at least one of the following: materials identification, tested properties and test methods, date inspected, contact details of inspectors, evidence of conformance, signature data.

**Table 10. Exemplary quality assurance data**

| ***Data structure 177*** |
|---|
| *Final batch size (weight)* |
| *Batch and*/*or Lot number* |
| *Certificate of Analysis (COA) and associated data* |
| *Product batch data (time, weight, properties)* |
| *Laboratory information management system (LIMS) quality assurance data* |
| *Product release code (e.g. for internal use)* |
| *Time stamp* |

Shipping. Packages are shipped, for example as part of shipping process 180. A shipping lot is formed, said lot comprising at least one package. In connection with the shipping process, shipment lot data 186 is registered into the manufacturing information system, for example into a database such as database 200. The shipment lot data may be registered or received in electronic form from another system, for example from a SCADA system. Registering may be done at least in part in an automatic manner, whereby a request for at least part of the data 186 is triggered by the creation, finalization or acceptance of a shipping process order within database 200. The data structure 186 for the shipment lot comprises data 176 of each package within the shipment lot. The presence of the data 186 within a database such as database 200 may serve as an indication that the process 100 or 101 is complete.

**Table 11. Exemplary shipment lot data**

| |
|---|
| ***Data structure 186*** |
| *Package data 176 (for each package in shipment)* |
| *Type of feedstock specification* |
| *Batch and*/*or Lot number of supplier* |
| *Customer required quality control parameter 1..n* |
| *Shipment number* |
| *Delivery number* |
| *Sales order* |
| *Loading instruction* |
| *Delivery papers* |
| *Time stamp* |

Each batch may form one or more shipment lots, whereby a batch may be shipped (in separate shipment lots) to multiple customers in delivery phase 190. In connection with the delivery phase, outgoing delivery data 191 is registered into the manufacturing information system, for example into a database such as database 200. The outgoing delivery data 191 may be registered or received in electronic form from another system, Once the customer receives the shipment lot, data such as a time stamp may be provided into database 200, for example by a shipment tracking system. Such a system may be connected to database 200 via a cloud service, such as cloud service 800.

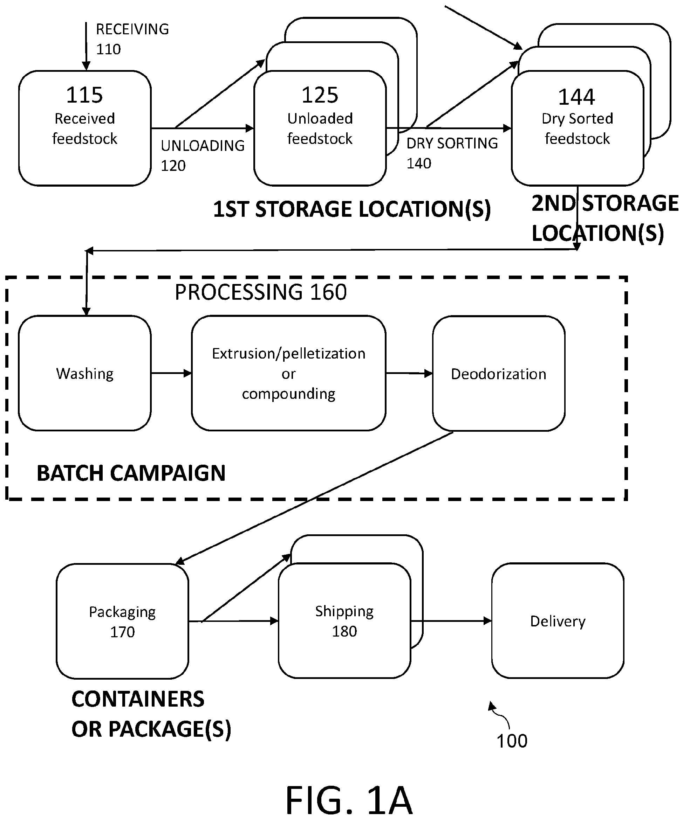

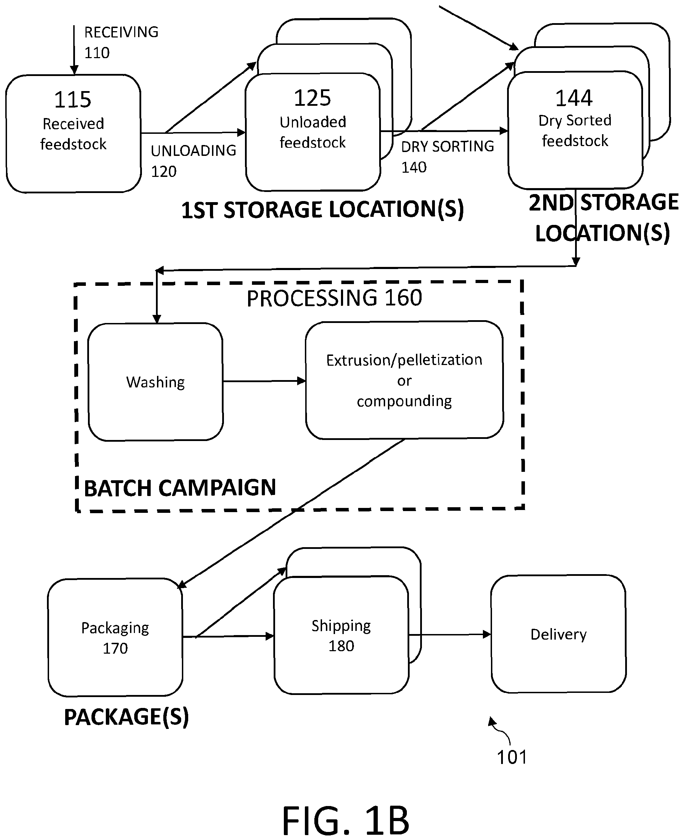

FIGURES 1A and 1B illustrate exemplary embodiments of a process, such as process 100 or 101 in accordance with at least some embodiments of the present disclosure.

In Fig.1A, the feedstock is received in phase 110 of process 100. The received feedstock 115 is unloaded in phase 120. Unloaded feedstock 125 is stored in one or more first storage locations 135. A first storage location preferably comprises material from only a single received feedstock. In phase 140, the stored feedstock is dry sorted into at least one second storage location 155. The contents of each second storage location 155 may comprise quantities of feedstock from other received feedstocks.

In phase 160, the dry sorted feedstock is processed, whereby a batch campaign is first formed. In forming the batch campaign, material from at least one second storage location 155 is selected for processing. The batch campaign specifies the quantity of material to be produced and the processing parameters. The dry sorted feedstock is processed according to the batch campaign. Processing may comprise at least one of the following: washing, pelletization, compounding, deodorization. Processing may use material from a plurality of second storage locations and/or virgin material.

In phase 170, recycled material 166 is packed for shipping. Shipping may be in bulk, wherein larger containers are used. Alternatively, shipping may be in packaged form, wherein the material may be packed in packages, for example in packages of 25 kilos, or for example in octabins or big bags of hundreds of kilos. A single batch campaign may form multiple containers or packages 175. A single container or package 175 may comprise material from multiple batch campaigns. After the material is packed, it is formed into at least one shipment lot 185. A shipment lot 185 may comprise material from multiple packings and consequently a shipment lot 185 may comprise material from multiple batch campaigns. The shipment lot 185 is shipped to a recipient according to shipping details.

Figure 1B shows a process 101 similar to the process 100 shown in Fig. 1A, with the difference that after the extrusion/pelletization or compounding phase within processing 160, the material is then packaged in phase 170. This clarifies the optional nature of the deodorization phase within the process 160.

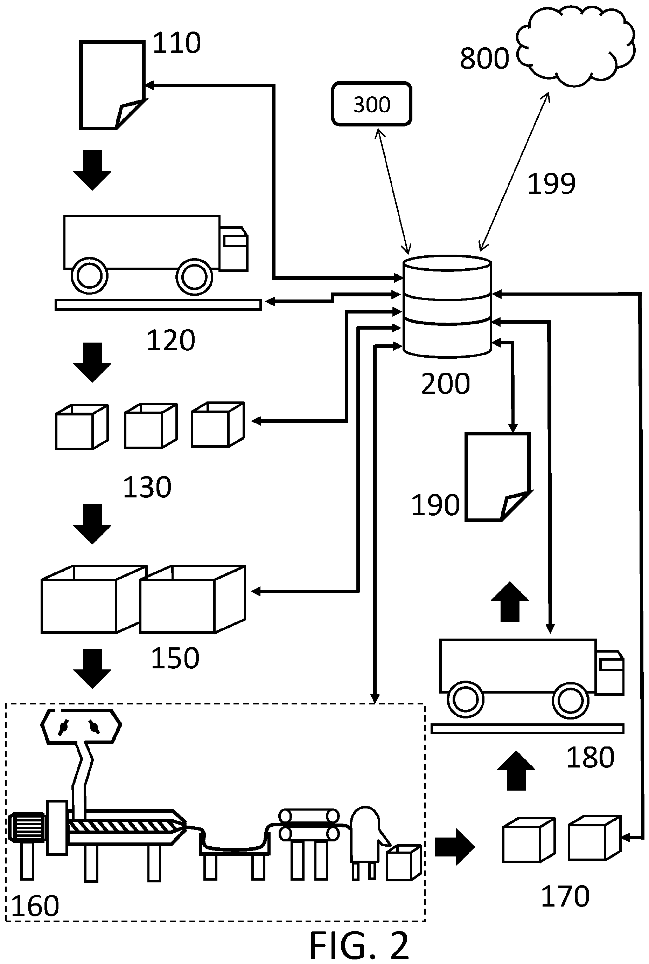

FIGURE 2 illustrates an exemplary embodiment of phases and equipment involved in a process such as 100 or 101. In Figure 2, the connections between each phase and a database 200 are shown. As can be seen within the Figure, each phase may be connected to the database 200, so that data relating to the phase is registered into database 200. While figure 2 shows direct connections between each phase and the database, the connections may be indirectly formed as well. The connections may be formed via any suitable means, including connection means disclosed herein. At least some of the connections shown are of an optional nature. Database 200 may further be connected to a cloud computing service 800 or the internet.

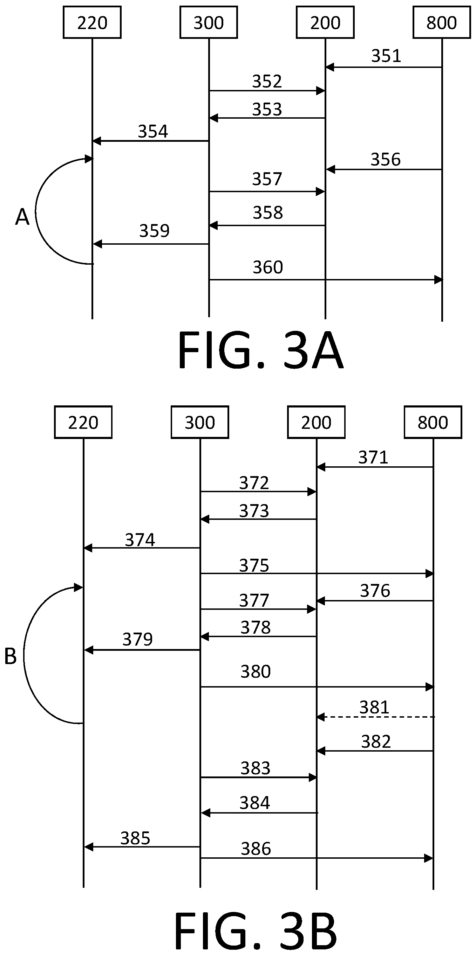

FIGURES 3A and 3B are exemplary sequence diagrams illustrating communication between an apparatus, a database and a cloud service. A data structure is also shown in the figure for the sake of clarity. Each entity within the figures has a vertical line which is a so-called lifeline. Data transmission is illustrated with arrows that extend between these lifelines. After each transmission is performed, the response or next transmission is located under the previous one.

Figure 3A shows data structure 220, apparatus 300, database 200 and cloud service 800. Apparatus 300 may be configured to provide data structure 220, wherein the providing may comprise generating, editing or transmitting the data structure in whole or in part. Apparatus 300 may be configured to communicate with or otherwise utilize a database, for example database 200. Such communication is illustrated with the arrows linking apparatus 300 to other entities within figure 300.

Apparatus 300 and database 200 are configured to communicate with cloud service 800 as seen in the figure. Additional apparatuses and middleware programs may optionally be used to facilitate communication. Apparatus 300 and database 200 may be configured to communicate with other apparatuses, for example via cloud service 800. Apparatus 300 may comprise an application layer configured to interact with at least one database 200. Apparatus 300 may comprise a user interface layer (also known as a presentation layer) connected to the application layer. Apparatus 300 may be configured to add data, for example process orders, to database 200. When such process orders are added, the manufacturing information system connected to the database 200 is configured to cause the corresponding processes to be performed. Human approval may be required for some processes.

Connections to, for example, processing equipment such as extrusion devices may be facilitated via Ethernet, CANBUS, or other suitable technologies. In particular, connections to weighing equipment, such as scales, associated with storage locations, are beneficial because such connections allow inclusion of mass balance data into database 200. Devices connected to database 200 may be configured to autonomously add data into databases 200. Cloud service 800 is configured to communicate with external apparatuses, in particular cloud service 800 is configured to receive incoming details regarding feedstock and delivery information such as shipment status information and proof(s) of receipt.

Data structure 220 may be provided by an apparatus, for example the apparatus 300. Data structure 220 may be generated automatically by an apparatus, such as apparatus 300, responsive to an indication. An indication may comprise, for example, receiving incoming shipment details in database 200. Apparatus 300 may be configured to automatically monitor database 200 for indications. For example, the apparatus 300 may be configured to check for new indications within the database 200.

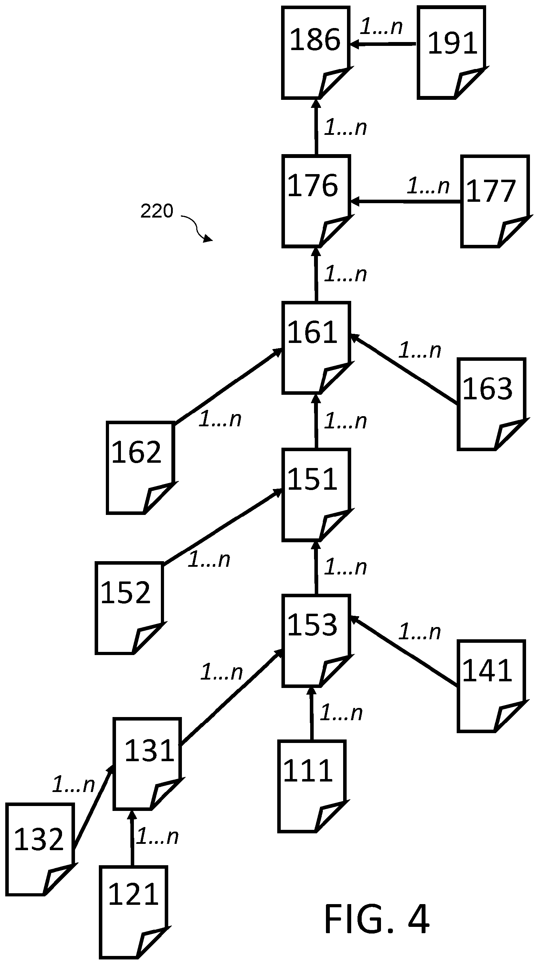

An apparatus such as apparatus 300 may preferably be configured to populate data into data structure 220 as such data is received into the database 200. For the sake of clarity, data here refers to any data within database 200, in particular the datas listed in connection with Figure 4. The apparatus may be configured to check the database for new data, wherein the checking may be repeated after a predefined interval. A predefined interval in this or any other context may be a time from 1 millisecond to 60 minutes, preferably from 1 second to five minutes, even more preferably from 30 seconds to 180 seconds. After the checking, the apparatus may check data structure 220 to see if the new data in the database should be added, and if so, it may add it to data structure 220.

An apparatus, such as apparatus 300, may be configured to provide data structure 220 in whole or in part. Such providing may take place, for example, via cloud service 800. The providing may comprise providing access to data structure 220, for example via the HTTP protocol. The providing may comprise providing a copy of data structure 220, preferably in a machine-readable format. Data structure 220 may be provided, for example, in at least one of: a JavaScript Object Notation, JSON, file format, a comma-separated value format, a PDF format.

The apparatus may be configured to provide data structure 220 in at least the following formats: full, manufacturing, customer, redacted. The full format comprises all data within data structure 220. The manufacturing format may comprise the QA data and the mass balances calculated between each processing phase. The customer format may have personally identifying information, PII, regarding production employees removed from the data structure. Further, predetermined trade secret data may be removed from the customer format. In the redacted format, all data fields may be shown, but the actual data is not. This allows the recipient to see that the data exists, but has not been provided. Apparatus 300 may be configured to provide the data structure 220 in all formats, for example concurrently, where a predetermined permission level of the recipient determines which format of the structure 220 is accessible by said recipient. The predetermined permission level may correspond to the formats. In other words the levels may be: full, manufacturing, customer, redacted.

An apparatus, such as apparatus 300, may be configured to determine a time of delivery estimate responsive to an indication being found within database 200. Such an indication may comprise delivery data 111. The determination of the time of delivery estimate may comprise estimating a time to delivery and calculating an estimated delivery date. Estimating a time to delivery may be done based on historical data within the database 200, where the time durations of previously performed phases is stored. Calculating the delivery date may be performed by adding the time to delivery to the present date, adding an estimated shipping duration obtained via cloud service 800, and optionally adding 1-2 days extra time.

In the figure 3A, incoming shipment details which may comprise data 111 are received into database 200 via cloud service 800 in phase 351. Apparatus 300 is configured to interpret said incoming shipment details as an indication to generate a data structure 220. The apparatus 300, being configured to check the database at predefined intervals, checks the database 200 in phase 352. Apparatus 300 then locates the indication within the database, illustrated by phase 353. Apparatus 300 generates the data structure 220 in phase 354.

In phase 356, data is received into database 200. The data may be received via cloud service 800 or it may be received from elsewhere. The data may be any data, in particular data related to the production process as seen in figures 1 and 2, in particular data received from a smart scale. Apparatus 300 is configured to check the database at predefined intervals in phase 357. As part of the checking, apparatus 300 is configured to determine if data, for example newly added data, within the database 200 is relevant to data structure 220. In the event the determination is positive, the apparatus is configured to add the data to the data structure. This is illustrated by phase 358. In phase 359, apparatus 300 adds any applicable data to the data structure 220. Should the determination be negative, the apparatus is configured to repeat the checking phase at a predefined interval.

On the left margin of figure 3A a curved arrow indicating a loop is shown. This loop is termed loop A. Loop A may comprise phases 356, 357, 358 and 359. Loop A may be repeated several times, for example thousands of times, before moving to phase 360. In a temporal sense, the repetitions of loop A may encompass the entire progress (or a majority therein) of the feedstock, from receiving through dry sorting and processing and finally shipping. Applicable data may be any suitable data, in particular data discussed herein with respect to figure 4, preferably at least one of data 111, 121, 131, 132, 141, 151, 152, 153, 161, 162, 163, 176, 177 or 186.

In phase 360, apparatus 300 is configured to provide the data structure in whole or in part via cloud service 800. Provision in part is done, for example, via the formats discussed above with respect to the data structure 220. The providing may be to internal or external stakeholders, for example. Apparatus 300 may be configured to provide the data structure responsive to an indication to do so being present within database 200. For example, apparatus 300 may be configured to interpret shipping details, for example within shipment lot data 185 as such an indication. Apparatus 300 is configured to check for the indication within loop A in phase 357, whereby if the indication is found within the database, it and any other applicable data are added into data structure 220 in phases 358 and 359. Loop A is then terminated and followed by the providing in phase 360.

In Figure 3B, phases 371, 372, 373 and 374 correspond to phases 351, 352, 353 and 354, respectively, of Figure 3A. In phase 375 apparatus 300 may be configured to provide the generated data structure 220 via cloud service 800. This is beneficial because internal or external stakeholders may then receive the initial data structure in an early stage of the production process, for example even before the material has been unloaded. Apparatus 300 may be configured to provide estimates and production plans within data structure 220 as part of phase 375. Such estimates and production plans may be generated based on previously recorded data and provided, clearly marked as estimates, upon generation of the data structure 220. This allows stakeholders to react in good time to any errors in the production plan.

In phase 376, data is received into database 200 in a similar manner as discussed above with respect to phase 356. Apparatus 300 is configured to check the database at predefined intervals in phase 377 in a similar manner as discussed above with respect to phase 357. As part of the checking, apparatus 300 is configured to determine if data within the database 200 is relevant to data structure 220. In the event the determination is positive, the apparatus is configured to add the data to the data structure. This is illustrated by phase 378. In phase 379, apparatus 300 adds any applicable data to the data structure 220. Should the determination be negative, the apparatus is configured to repeat the checking phase at a predefined interval.

In phase 380, the apparatus is configured to provide the current version of the data structure 220 via cloud service 800. This is beneficial because internal or external stakeholders may then receive the updated data structure throughout the production process and react to any changes accordingly. As part of phase 380, the apparatus may be configured to include an approval request with the updated data structure. If such a request is included, the stakeholder will reply in phase 381, which is optional as not every phase 380 will comprise the approval request. As can be seen from the figure, the approval is included in database 200. Consequently, approvals will be added to both the database 200 and the data structure 220. In the event of a disapproval, this will also be added to both the database 200 and the data structure 220 and the apparatus is configured to alert the production process responsible.

On the left margin of figure 3B a curved arrow indicating a loop is shown. This loop is termed loop B. Loop B may comprise phases 376, 377, 378, 379, 381 and 382. Loop B may be repeated several times, for example thousands of times, before moving to phase 383. In a temporal sense, the repetitions of loop B may encompass the entire progress (or a majority therein) of the feedstock, from receiving through dry sorting and processing and finally shipping. Applicable data may be any suitable data as discussed above. Apparatus 300 is configured to check for the approval in phase 375. Apparatus 300 may be configured to wait for the approval before moving to phase 378. Consequently, any changes, for example batch size, will be "signed off" by the stakeholders, for example the recipient of the material. Alternatively, apparatus 300 may be configured so that the apparatus 300 moves on with the loop and adds data to the data structure, whatever the approval status may be. This may be beneficial because the production process may be ongoing and cannot wait for approval for too long.

Apparatus 300 may be configured so that approval is only requested for a certain type of change. For example, approval may be requested for a change which affects at least one of the following: the estimated delivery date, the quantity of the material to be processed, the homogeneity of the material (how many sources the material is coming from) or the provenance of the material.

In phase 381, received shipment details are received into database 200 via cloud service 800. Apparatus 300 may be configured to interpret such details as an indication that data structure 220 may be finalized. Apparatus 300 is configured to check for the indication in phase 377, whereby if the indication is found within the database, it and any other applicable data are added into data structure 220 in phases 378 and 379, followed by the providing in phase 380.

In phase 383, the apparatus is configured to check the database at predefined intervals for the presence of a receipt, wherein the receipt indicates that a shipment has arrived at its destination and been accepted by the recipient. Once the receipt has been added to the database, and found by the apparatus in phase 384, the apparatus is configured to finalize the data structure 220 in phase 385. The finalizing (or "signing") may comprise calculating a message digest code using the content of the data structure 220 as an input for the calculation, and adding the calculated message digest code to the data structure 220. Suitable algorithms include at least SHA-512. In phase 386, the finalized data structure 220 is provided by apparatus 300 to all stakeholders via cloud service 800. Finalization provides the benefit of ensuring data integrity.

FIGURE 4 illustrates an example data structure 220 usable with at least some of the embodiments disclosed herein. Data structure 220 may be provided as a tree data type, where each data is a node. Each node may be connected to several children, but may have only one parent (with the exception of node 186, which is the root node in exemplary figure 4). Alternatively, data structure 220 may be provided as multiple tree data types, which are linked hierarchically or listed sequentially. Alternatively, data structure 220 may be provided in a list format, where the data is listed sequentially.

The data structure 220 comprises data 186 relating to a shipment lot 185. Shipment lot data 186 comprises package data 176 for each package or container 175 within the shipment lot 185. Shipment lot data 186 may preferably comprise quality control data 177 for each package or container 175 within the shipment lot 185. Package data 176 comprises batch campaign data 161 for each package or container 175 within the shipment lot 185. As a package or container may comprise material from multiple batch campaigns, consequently package data 176 may comprise several batch campaign datas 161.

Batch campaign data 161 may preferably comprise process parameters 162, wherein the process parameters may comprise parameters from at least one process. Batch campaign data 161 may preferably comprise measured weights of material, wherein the weight of the material is measured before and after each process. Batch campaign data 161 comprises second storage location data 151 for each second storage location 155 that provided material for the batch campaign. Second storage location data 151 comprises location identifier 152. Second storage location data 151 comprises sorted feedstock data 153 for each quantity of sorted feedstock 145 within the second storage location 155. A location identifier may comprise an alphanumeric and/or machine-readable value logically linked to the location.

Sorted feedstock data 153 comprises dry sorting data 141 associated with the dry sorting of said feedstock quantity. Sorted feedstock data 153 comprises data 111 relating to the receiving of the feedstock. Sorted feedstock data 153 comprises first storage location data 131 for each source first storage location 135. First storage location data 131 comprises storage location identifier 132 and unloading data 121.

The logical links between the data 121, 132, 131, 111, 141, 153, 152, 151, 162, 161, 163, 176, 177, 186 and 191 shown in Fig. 4 allow troubleshooting throughout the entire recycling process based on the data structure 220. For example, if the shipment lot corresponding to data 186 does not pass customer quality control, the data structure may be analysed to find a root cause of the failure to pass. Such analysis may be done at least in part by an apparatus configured to parse/and or display data structure 220. Such analysis may be done based only on data structure 220, or additionally database 200 may be queried for updated data.

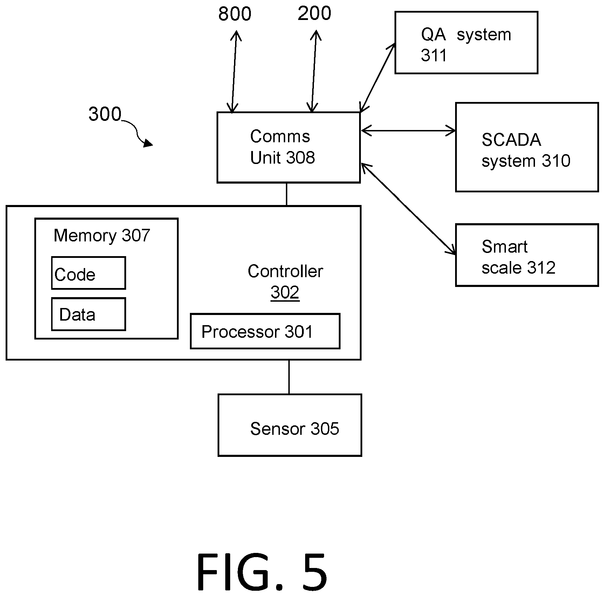

FIGURE 5 illustrates an example apparatus 300 capable of supporting at least some embodiments of the present disclosure. Apparatus 300 may be used to perform any of the methods disclosed herein. The apparatus may comprise a processing core 301, at least one memory 307 including computer program code, the at least one memory 307 and the computer program code being configured to, with the at least one processing core, cause the apparatus at least to participate in providing database 200. The apparatus may comprise database 200. Database 200 may be provided by a single apparatus 300, for example a server. The apparatus may comprise an enterprise resource planning, ERP, system. The apparatus may be connected to any number other apparatuses, for example a manufacturing information system (SCADA system) 310, a quality control system 311, a smart scale 312, in order to obtain data. Said connection may be provided by a communications unit 308 that is comprised in or connected to apparatus 300, for example a network interface. The apparatus 300 may be configured to provide access to database 200.

In embodiments, the apparatus is connected to a cloud computing service, for example cloud 800. Cloud 800 may comprise a server. The apparatus may be connected to the cloud via TCP/IP, for example. The apparatus may receive and transmit data, for example any of the above-mentioned data, via the cloud. Database 200 may be stored wholly or partly within the cloud. The cloud may be configured so that parties such as vendors and customers may access at least part of database 200 via the cloud. In embodiments, the apparatus is connected to the Internet.

The memory 307 is capable of storing instructions, such as at least one of: operating system, various applications, models, neural networks and/or, preprocessing sequences. Furthermore, the memory may include a storage that may be used to store, e.g., the database 200 and/or at least some of the information and data used in the disclosed embodiments. The memory 307 may be embodied as one or more volatile memory devices, one or more non-volatile memory devices, and/or a combination of one or more volatile memory devices and non-volatile memory devices. For example, the memory may be embodied as semiconductor memories (such as mask ROM, PROM (programmable ROM), EPROM (erasable PROM), flash ROM, RAM (random access memory), etc.).

Although the apparatus 300 is depicted as including one processor, the apparatus 300 may include several processors. Furthermore, the processor 301 is capable of executing the stored instructions. The processor 301 may be embodied as a multi-core processor, a single core processor, or a combination of one or more multi-core processors and one or more single core processors. For example, the processor may be embodied as one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like. In an embodiment, the processor may be configured to execute hard-coded functionality. In an embodiment, the processor is embodied as an executor of software instructions, wherein the instructions may specifically configure the processor to perform at least one of the methods and/or operations described herein when the instructions are executed.

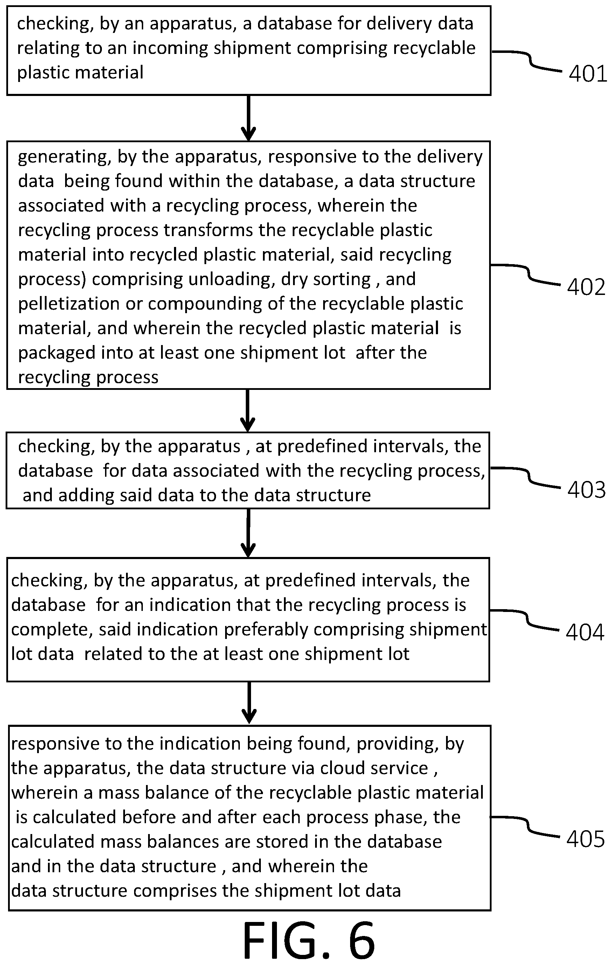

FIGURE 6 illustrates an example method comprising phases 401, 402, 403, 404 and 405, said method capable of supporting at least some embodiments of the present disclosure. In phase 401, an apparatus such as apparatus 300 checks a database such as database 200 for delivery data such as data 111. In phase 402, the apparatus generates a data structure such as data structure 220. In phase 403, the apparatus checks the database for updated data to add to the data structure. In phase 404, the apparatus checks the database for an indication that the recycling process is complete, for example for shipping details within shipment lot data 185. Phases 403 and 404 may be performed simultaneously, as both involve the apparatus checking the database. In phase 405, the apparatus is configured to provide the data structure via a cloud service such as cloud service 800.

It is to be understood that the embodiments of the invention disclosed are not limited to the particular structures, process phases, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In this description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

The present disclosure can also be utilized via the following clauses.
Clause 1. A method for recycling plastic, the method comprising:
   - receiving (110) feedstock (114), measuring the received feedstock(114) and storing, in a database (200), delivery data (111) associated with the received feedstock(114) comprising the result of the measurement,
   - unloading (120) at least a part of the received feedstock (114) into at least one first storage location (135), and storing, in the database (200), unloading data (121) associated with the unloaded feedstock, wherein said unloading data (121) comprises a identifier of the at least one first storage location (135) and a measured net weight of the feedstock within the at least one first storage location (135) and first storage location data (131) associated with the at least one first storage location (135),
   - dry sorting (140) the feedstock (114) within the at least one first storage location (135) so that the dry sorted feedstock (144) is sorted into at least one second storage location (155) and dry sorting data (141) associated with the dry sorting is stored within the database (200), where contents of said at least one second storage location (155) may optionally comprise quantities of feedstock from other received feedstocks, and storing, in the database (200), second storage location data (151) which is associated with the at least one second storage location (155), said second storage location data (151) comprising:
      - an identifier (152) of the at least one second storage location (155),
      - sorted feedstock lot data (153) associated with each dry sorted quantity of feedstock (145) within the at least one second storage location (155), said sorted feedstock lot data (153) comprising:
         - a measured net weight of the quantity of sorted feedstock (145) within the second storage location (155),
         - the dry sorting data (141) associated with each quantity of feedstock (144),
         - the delivery data (111),
         - the first storage location data (131) associated with the at least one first storage location (135), and
         - the unloading data (121),
   - forming a batch campaign by selecting at least one second storage location (155) to provide material to undergo processing (160), the processing (160) comprising at least washing and extrusion,
   - generating, in the database (200), a data structure (161) related to the batch campaign, said data structure comprising:
      - second storage location data (151) associated with each of the at least one second storage location (155),
      - process parameters (162) associated with the processing, and
      - measured weight (163) of the material before and after each processing phase,
   - after processing (160), packaging (170) at least some of the quantity of the processed material, so that the packaged processed material forms at least one package (175), measuring said at least one package (175) and generating, in the database (200), a data structure (176) related to the package comprising the batch campaign data (161), the identifier of the package (175) and the result of the measurement of the package (175),
   - forming (180) at least one shipment lot (185) by selecting at least one package (175) and generating, in the database (200), shipment lot data (186) related to the shipment lot comprising at least the data structures (176) related to each selected package (175),
   - adding, in the database (200), shipping details of the shipment lot (185) to the shipment lot data (186) related to the shipment lot (185),
   - and providing (199), to a receiver of the shipment lot (185), access to at least a part of the shipment lot data (186),
   wherein mass balances are calculated based on weighing before and after each phase (110, 120, 130, 140, 150, 160, 170, 180, 190), and wherein said calculated mass balances are stored within the database (200) and added to the batch campaign data (161).
Clause 2. An apparatus (300) configured to at least participate in performing the method of clause 1.
Clause 3. The apparatus of clause 2, wherein the received feedstock (114) is in the form of bales comprising recyclable plastic objects; and wherein the processing (160) produces plastic pellets.
Clause 4. A non-transitory computer readable medium having stored thereon a set of computer readable instructions that, when executed by at least one processor, cause an apparatus to at least perform the method of clause 1 or claim 10.
Clause 5. One or several computer programs configured to cause a method in accordance with at least one of clause 1 or claims 10 - 14 to be performed.

### INDUSTRIAL APPLICABILITY

At least some embodiments of the present invention find industrial application in recycling plastics and/or in plastic production.

### ACRONYMS LIST

- COA: Certificate of Analysis
- ERP: Enterprise Resource Planning
- JSON: JavaScript Object Notation
- LIMS: Laboratory information management system
- PII: Personally identifiable information
- PDF: Portable document format
- QA: Quality assurance
- SCADA: Supervisory Control And Data Acquisition

### REFERENCE SIGNS LIST

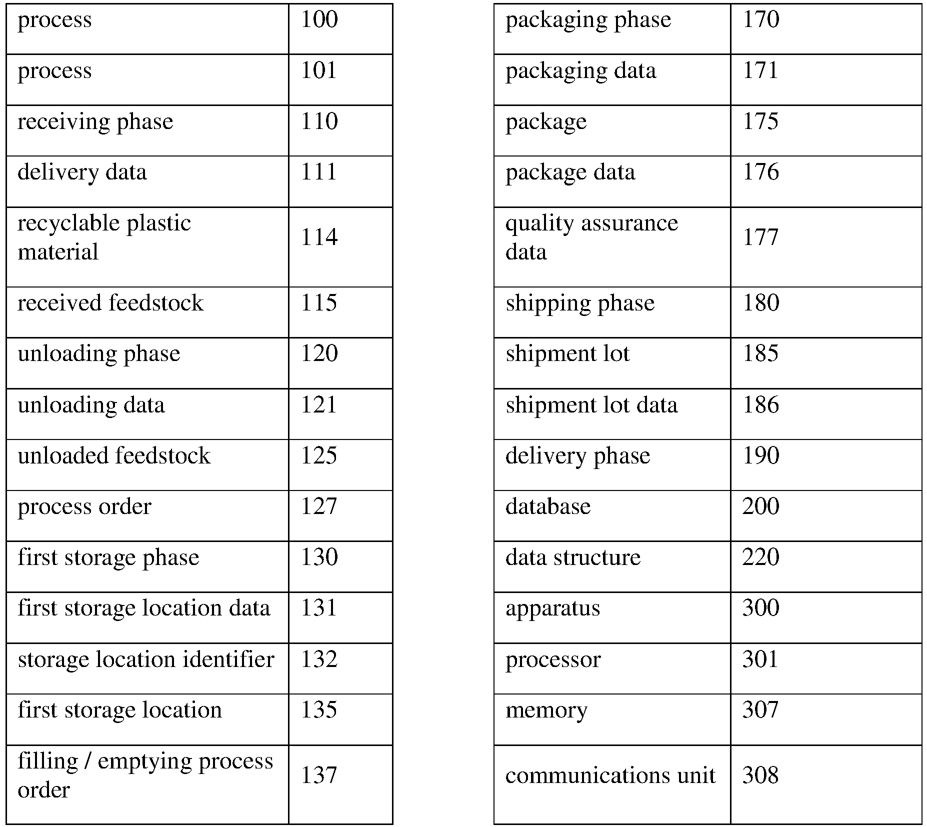

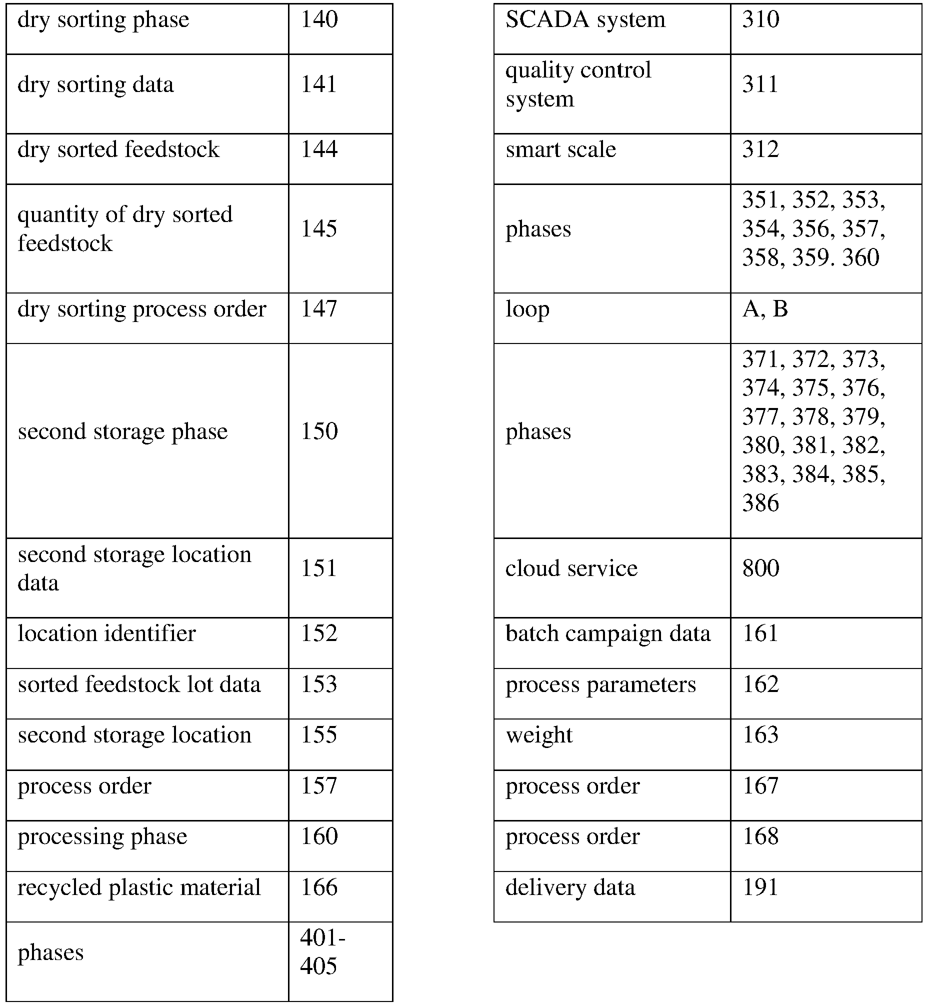

## Claims

1. An apparatus (300) comprising a processing core, at least one memory including computer program code, the at least one memory and the computer program code being configured to, with the at least one processing core, cause the apparatus at least to:
- check a database (200) for delivery data (111) relating to an incoming shipment, the incoming shipment comprising recyclable plastic material (114),
- generate, responsive to the delivery data (111) being found within the database (200), a data structure (220) associated with a recycling process (100, 101), wherein the recycling process (100, 101) transforms the recyclable plastic material (114) into recycled plastic material (166), said recycling process (100, 101) comprising unloading (120), dry sorting (140), and pelletization or compounding of the recyclable plastic material (114), and wherein the recycled plastic material (166) is packaged into at least one shipment lot (185) after the recycling process (100, 101),
- check, at predefined intervals, the database (200) for data (121, 131, 132, 141, 151, 152, 153, 161, 162, 163, 176, 177) associated with the recycling process (100, 101), and add said data to the data structure (220),
- check, at predefined intervals, the database (200) for an indication that the recycling process (100, 101) is complete, said indication preferably comprising shipment lot data (186) related to the at least one shipment lot (185), and
- responsive to the indication being found, provide the data structure (220) via cloud service (800),
wherein a mass balance of the recyclable plastic material is calculated before and after each process phase, wherein the calculated mass balances are stored in the database (200) and in the data structure (220), and
wherein the data structure (220) comprises the shipment lot data (186).

2. The apparatus of claim 1, wherein the provided data structure (220) comprises data (121, 131, 141, 151, 152, 153, 161, 162, 163, 176, 177) related to at least the unloading (120), the dry sorting (140), the processing (160) and the packaging (170).

3. The apparatus of any one of the preceding claims, wherein the apparatus (300) is configured to provide (360, 375, 380) the data structure (220) or access to said data structure (220) after the generation and at predefined intervals thereafter.

4. The apparatus of any one of the preceding claims, wherein the apparatus (300) is configured to cause phases (120, 140, 160, 180, 190) of the recycling process (100, 101) to be performed by generating at least one process order corresponding to at least one of said phases and by adding the at least one process order to the database (200).

5. The apparatus of any one of the preceding claims, wherein the apparatus (300) is configured to provide the data structure (220) in several formats at once, wherein a predetermined permission level of the recipient determines which format is accessible to said recipient, wherein the formats and/or the predetermined permission levels comprise the following: full, manufacturing, customer, redacted.

6. The apparatus of any one of the preceding claims, wherein the provided data structure (220) comprises a first batch campaign data (161) related to a first batch campaign and a second batch campaign data (161) related to a second batch campaign, wherein the second batch campaign is distinct from the first batch campaign.

7. The apparatus of any one of the preceding claims, wherein the dry sorting (140) comprises sorting the recyclable plastic material (114) from at least one first storage location (135) into at least one distinct second storage location (155) according to color and material.

8. The apparatus of any one of the preceding claims, wherein the processing (160) comprises at least one of: compounding or deodorization; and wherein the batch campaign data (161) comprises process parameters (162) related to said compounding or said deodorization, wherein the process parameters (162) comprise timestamps and wherein the process parameters (162) are autonomously added to the database (200).

9. The apparatus of any one of the preceding claims, wherein the shipment lot data (186) comprises quality assurance data (177), comprising a certificate of analysis.

10. The apparatus of any one of the preceding claims, wherein the recyclable plastic material (114) is in the form of bales comprising recyclable plastic objects and wherein the processing (160) produces plastic pellets.

11. A method for producing information related to a plastic recycling process, the method comprising:
- checking, by an apparatus (300), a database (200) for delivery data (111) relating to an incoming shipment comprising recyclable plastic material (114),
- generating, by the apparatus (300), responsive to the delivery data (111) being found within the database (200), a data structure (220) associated with a recycling process (100, 101), wherein the recycling process (100, 101) transforms the recyclable plastic material (114) into recycled plastic material (166), said recycling process (100, 101) comprising unloading (120), dry sorting (140), and pelletization or compounding of the recyclable plastic material (114), and wherein the recycled plastic material (166) is packaged into at least one shipment lot (185) after the recycling process (100, 101),
- checking, by the apparatus (300), at predefined intervals, the database (200) for data (121, 131, 132, 141, 151, 152, 153, 161, 162, 163, 176, 177) associated with the recycling process (100, 101), and adding said data to the data structure (220), and
- checking, by the apparatus (300), at predefined intervals, the database (200) for an indication that the recycling process is complete, said indication preferably comprising shipment lot data (186) related to the at least one shipment lot (185),
- responsive to the indication being found, providing, by the apparatus (300), the data structure (220) via cloud service (800),
wherein a mass balance of the recyclable plastic material is calculated before and after each process phase, the calculated mass balances are stored in the database (200) and in the data structure (220), and
wherein the data structure (220) comprises the shipment lot data (186).

12. The method of claim 11, wherein the apparatus (300) is configured to provide (360, 375, 380) the data structure (220) or access to said data structure (220) after the generation and at predefined intervals thereafter.

13. The method of any one of the claims 11 - 12, wherein the apparatus (300) is configured to cause phases (120, 140, 160, 180, 190) of the recycling process (100, 101) to be performed by generating at least one process order corresponding to at least one of said phases and by adding the at least one process order to the database (200).

14. The method of any one of the claims 11 - 13, wherein the provided data structure (220) comprises a first batch campaign data (161) related to a first batch campaign and a second batch campaign data (161) related to a second batch campaign, wherein the second batch campaign is distinct from the first batch campaign.

15. A computer program configured to cause a method in accordance with at least one of claims 10 - 14 to be performed.
